# FASCICULE DE BREVET EUROPEEN

(11) **EP 1 781 978 B1**
(45) Date de publication et mention de la délivrance du brevet: **05.12.2012**
(21) Numéro de dépôt: 05798223.3
(22) Date de dépôt: 12.08.2005
(51) Int. Cl.: F16L 1/032, F16L 1/11, F16L 11/02, F16L 57/00, F16L 58/10, H02G 1/06, H02G 9/06, F16L 1/028

(54) **PROCEDE POUR PROTEGER UN CABLE OU UNE CONDUITE**
VERFAHREN ZUM SCHUTZ EINES KABELS ODER EINES ROHRS
METHOD FOR PROTECTING A CABLE OR A PIPE

(30) Priorité: 12.08.2004 FR 0408856
(43) Date de publication de la demande: 09.05.2007
(73) Titulaire: Dalaine, Jean-Charles, 56190 Ambon (FR)
(72) Inventeur: LANGLOIS, Christian, 92250 Beauchamp (FR)
(74) Mandataire: Pontet, Bernard
(86) Numéro de dépôt international: PCT/FR2005/002080
(87) Numéro de publication internationale: WO 2006/021683

(56) Documents cités:
- US-A- 5 176 025
- US-A- 5 713 392
- US-A- 5 902 070

## Description

La présente invention se rapporte à un procédé pour protéger une conduite, une canalisation ou un câble enterré. La présente invention s'applique généralement à la protection de tout objet de ce type, de forme allongée et enterré. Ces objets seront regroupés dans les vocables canalisation et câble.

Les normes de sécurité recommandent de protéger, notamment les câbles électriques, en les entourant de sable ou de sablon. Cela nécessite notamment l'évacuation des terres de déblais, l'approvisionnement, le stockage et la reprise de grandes quantités de matériaux nobles et chers, du type sable ou sablon. L'évacuation et l'approvisionnement nécessitent l'utilisation de nombreux camions, ce qui engendre une gêne, du bruit, particulièrement dans les villes ainsi que des pollutions.

Les recherches effectuées jusqu'à présent pour remplacer le remblaiement en sable ou en sablon n'ont pas abouti. Ainsi, l'utilisation de coques externes se révèle coûteux, notamment du fait de nombreux standards de câbles. De même, l'enrobage avec un composite externe, s'il permet de résoudre certains des inconvénients coûte 2 fois plus cher que le remblaiement en sablon, et n'est donc envisageable que dans les zones difficiles d'accès.

Le brevet délivré sous le numéro FR 2 766 634, présente un procédé pour former un revêtement en une matière particulaire, par exemple du sable ou du sablon, autour d'une conduite ou d'un câble, dans lequel on réalise une enveloppe en forme de bande souple, l'enveloppe contenant la matière particulaire entre deux nappes de géotextile, l'enveloppe étant ensuite repliée autour du câble ou de la conduite à enfouir. Cependant, une telle enveloppe, utilisée sur de grandes distances, est volumineuse et difficile à manipuler. En outre, il est difficile de contrôler la répartition de la matière particulaire dans l'enveloppe.

Le brevet délivré sous le numéro US 5 176 025 présente un procédé pour former un environnement confiné autour d'un pipe line, destiné à contenir et détecter les fuites. Le tube d'acier est entouré d'une gaine formée de polyéthylène et de couches de matériaux géotextiles non tissés, associée à des détecteurs de fuite et un produit réactif à l'eau pour protéger le tuyau de la corrosion en créant un milieu alcalin. Le matériau géotextile est donc dans ce cas un constituant de l'enveloppe.

Le but de l'invention est de proposer un procédé de protection économiquement concurrentiel avec le simple remblaiement en sable ou en sablon, tout en évitant, au moins en grande partie, l'utilisation de sable ou de sablon.

Selon l'invention, un tel procédé pour protéger un câble ou une conduite comprend au moins les étapes suivantes:
- une bande de géotextile est mise en forme de gaine autour du câble ou de la conduite; et,
- on fixe la bande autour du câble ou de la conduite.

Il est caractérisé en ce que la bande comprend une seule nappe comprenant au moins une couche en matériau non tissé.

La nappe peut présenter une résistance à la traction, mesurée selon la norme EN ISO 10319, comprise entre 30 et 50 kN/m selon le sens machine et une résistance à la traction de 35 à 110 kN/m transversalement au sens de la machine. De préférence, elle présente une résistance à la traction comprise entre 35 et 45 kN/m selon le sens machine et/ou une résistance à la traction de 80 à 105 kN/m transversalement au sens de la machine.

La nappe peut aussi présenter une élasticité, mesurée selon la norme EN ISO 10319, comprise entre 50 et 110 % selon le sens machine et une élasticité comprise entre 40 et 80 % transversalement au sens de la machine. De préférence, elle présente une élasticité comprise entre 80 et 100 % selon le sens machine et une élasticité comprise entre 50 et 70 % transversalement au sens de la machine.

La nappe peut encore présenter une conductivité thermique élevée, mesurée à une température ambiante d'environ 8°C, comprise entre 0,05 et 0,9 W/(m.K), de préférence supérieure à 0,07 W/(m.K). Une conductivité thermique élevée est notamment utile pour la protection de câbles électrique. Elle permet de dissiper plus facilement la chaleur produite par la circulation du courant dans les câbles.

La masse de la nappe est avantageusement comprise entre 300 et 2000 g/m², et de préférence entre 650 et 1200 g/m².

La couche en matériau non tissé peut avoir une résistance au poinçonnement, mesurée d'après la norme EN ISO 12236, comprise entre 300 et 13000 N ou au-delà, de préférence entre 7000 et 13000 N encore plus de préférence comprise entre 9000 et 12000 N. Selon la norme EN 918, cette résistance au poinçonnement peut encore être comprise entre 0 et 16mm, de préférence entre 0 à 5mm, encore plus de préférence entre 0 et 3mm. Une grande résistance au poinçonnement est particulièrement utile pour protéger des conduites qui sinon pourraient être percées ou fissurées.

La couche en matériau non tissé peut présenter une porosité moyenne, mesurée à l'aide d'un porosimètre PMI utilisé en milieu aqueux, comprise entre 25 et 300µm, de préférence comprise entre 50 et 150µm.

La nappe peut être monocouche ou multicouche. Notamment, l'au moins une couche en matériau non tissé peut être une couche centrale en un matériaux non tissé de densité faible et de résistance mécanique élevée et la nappe peut en outre comprendre au moins une couche extérieure la couvrant sur au moins un côté, et avantageusement sur les deux côtés, en matériau non tissé de densité plus élevée. Chaque couche extérieure peut avoir une conductivité thermique élevée relativement à la couche centrale.

La bande peut être fixée par spiralage.

Plus avantageusement, la bande peut comprendre, en tout ou partie, un matériau thermo-soudable ce qui permet de fixer la bande par thermo-soudage sur elle-même. A titre d'exemples, le soudage peut ainsi se faire par air chaud, par laser ou à hautes fréquences, ou encore par un mélange de ces techniques. La matériau thermo-soudable peut être en tout ou partie un polypropylène ou un polyéthylène, ou un mélange de ceux-ci.

A titre de comparaison, pour une conduite de diamètre 160 mm enterrée dans une tranchée, l'utilisation d'une protection par sable nécessite 110 à 180 kg de sable par mètre linéaire de conduite, alors qu'une protection selon l'invention nécessite une bande de géotextile de 480 grammes par mètre linéaire et permet la réutilisation de tous les déblais pour le remblaiement de la tranchée, sans excédents.

Un tel procédé de protection peut en outre permettre un mouvement relatif du terrain et du câble ou de la conduite, sans qu'ils soient endommagés.

D'autres particularités et avantages de l'invention ressortiront encore de la description ci-après, relative à des exemples non limitatifs.

Aux dessins annexés :
- la figure 1 représente schématiquement un véhicule équipé pour mettre en oeuvre un procédé selon l'invention;
- la figure 2 est une vue schématique d'un dispositif pour la mise en oeuvre d'un procédé selon l'invention, par exemple dans le véhicule de la figure 1, utilisant un procédé de fixation par thermo-soudage de la bande à l'air chaud;

- la figure 3 est une vue schématique d'un dispositif pour la mise en oeuvre d'un procédé selon l'invention, par exemple dans le véhicule de la figure 1, utilisant un procédé de fixation par soudage de la bande aux ultrasons;
- les figures 4 et 5 sont respectivement des vues latérales et de dessus d'une remorque équipée d'un dispositif pour la mise en oeuvre d'un procédé selon l'invention, utilisant une spiraleuse pour fixer une bande ;
- la figure 6 représente un train de pose pour la pose d'un câble utilisant la remorque des figures 4 et 5 ; et,
- la figure 7 représente schématiquement trois câbles protégés selon l'invention ; et,
- la figure 8 est une vue en coupe transversale et schématique d'une bande de géotextile 1, utilisée dans un procédé selon l'invention.

Pour simplifier la description celle-ci sera faite en considérant la pose d'un câble. Les mêmes moyens et les mêmes procédés peuvent aussi être employés notamment pour la pose d'une conduite souple.

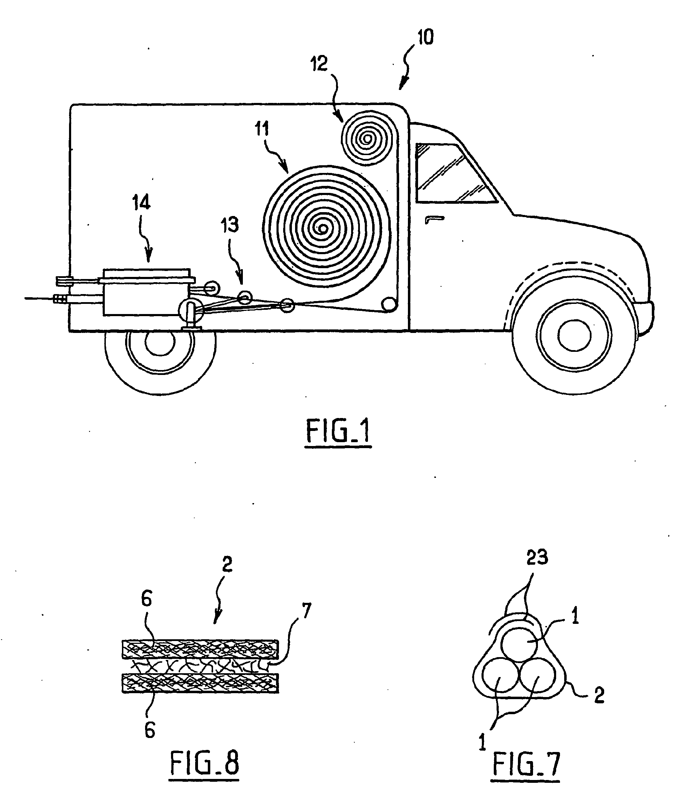

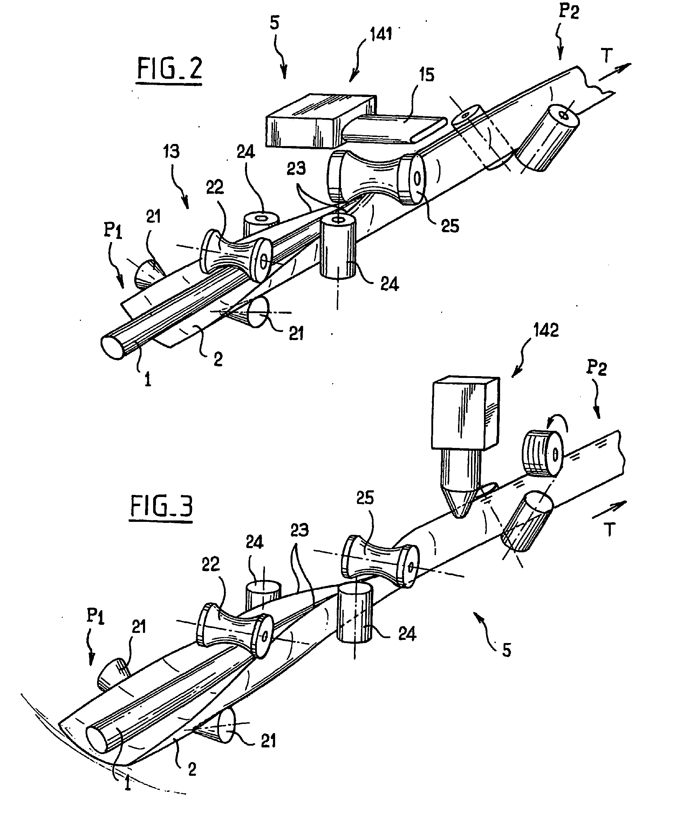

En dehors du matériel de terrassement, le matériel nécessaire au raccordement d'un abonné aux réseaux est généralement très compact. En effet, les longueurs et les diamètres de câbles sont faibles, et par conséquence les largeurs et les longueurs des bandes géotextiles utilisées à leur protection le sont aussi. Ce matériel peut être transportable dans un véhicule 10 de type fourgonnette, tel que représenté à la figure 1. Ce matériel sera décrit plus en détail en référence aux figures 2 et 3. Il comprend un touret 11 pour le câble, un touret 12 pour le géotextile, un conformateur 13 pour mettre en forme le géotextile autour du câble, et une unité de fixation 14.

La figure 8 représente une coupe transversale d'une bande de géotextile utilisé dans le procédé de protection selon l'invention. Cette bande est formée dans une unique nappe de géotextile. Cette nappe comprend une couche intérieure 7 de matériau non tissé de densité faible prise en sandwich entre deux couches extérieures 6 de géotextile de densité élevée.

Les figures 2 et 3 illustrent partiellement deux modes de réalisation pour un dispositif de protection 5 qui permet de mettre en oeuvre un procédé selon l'invention. Les parties illustrées peuvent équiper, par exemple, la fourgonnette de la figure 1.

Ces parties comprennent un conformateur 13 et des moyens de fixation 141,142 par soudage d'un géotextile thermo-soudable 2 autour d'un câble 1. La direction de traction, c'est-à-dire la direction du mouvement relatif du câble et du géotextile relativement au dispositif est indiquée par la flèche T.

Le câble est progressivement déposé sur le géotextile en forme de bande sensiblement plane en amont P1 du dispositif. Ensuite, le conformateur 13 vient replier le géotextile autour du câble de façon à former une gaine autour du câble.

Le conformateur comprend, de l'amont P1 vers l'aval P2, d'abord des rouleaux tronconiques disposés sous la bande de géotextile et un rouleau presseur 22 qui maintient le câble sur la bande, de sorte que la bande prend la forme d'un V. Au-delà les deux bords latéraux 23 sont maintenus verticaux entre des rouleaux verticaux 24. Enfin un rouleau en forme de diabolo 25 permet de rabattre les bords latéraux l'un sur l'autre et de les y maintenir.

Le recouvrement d'un bord sur l'autre est suffisant pour permettre une soudure solide d'un bord sur l'autre. Une largeur de recouvrement représentant 10 à 20% de la largeur de la bande est généralement suffisante.

Les dispositifs des figures 2 et 3 différent dans le mode de soudage utilisé. A la figure 2, le soudage est réalisé avec une buse 15 soufflant de l'air chaud. A la figure 3, le soudage est réalisé par un bloc de soudage à ultrasons 142.

En aval des moyens soudage, des rouleaux permettent de soutenir et de maintenir latéralement le câble dans sa gaine, dans une position adaptée pour son soudage.

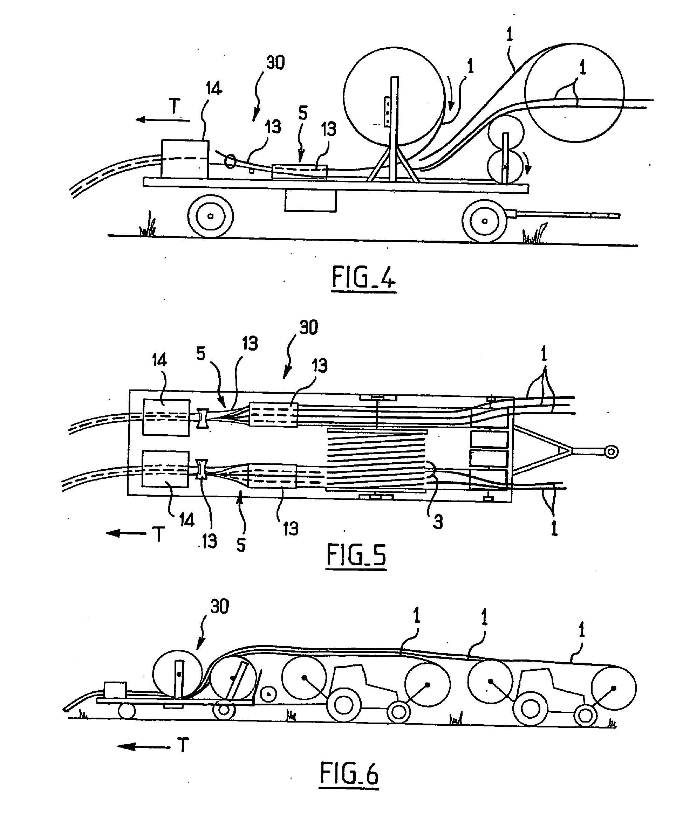

Dans le cas de la pose de câble sur de grandes longueurs, et/ou de câbles de fort diamètre, on peut utiliser une remorque 30 telle que représentée aux Figures 4 et 5. Une telle remorque permet d'utiliser un matériel plus encombrant et qui ne pourrait pas être contenu dans une fourgonnette telle que décrite précédemment.

La remorque de l'exemple décrit comprend deux dispositifs de protection 5 tels que décrits en référence aux figures 2 et 3. Dans le cas illustré, elle est prévue pour protéger trois câbles 1 dans chaque dispositif 5 et par une même gaine de géotextile. La figure 7 est une vue en coupe des trois câbles disposés en trèfle dans la gaine de géotextile 2.

La remorque porte deux tourets de câble 11 et deux tourets de géotextile 12, chaque touret de câble et chaque touret de géotextile étant affecté respectivement à l'un des dispositifs de protection. Comme illustré à la figure 6, la remorque fait partie d'un train de pose 31 pour les câbles. Ce train comprend deux véhicules 32 portant chacun deux autres tourets de câble 11. L'un des véhicules 32 est utilisé comme tracteur pour la remorque 30.

La qualité du travail réalisé est améliorée par rapport au remblaiement. Ainsi, la protection étant mise en oeuvre à mesure où l'on déroule le câble ou la conduite, celui-ci est protégé avant même le remblaiement de la tranchée. L'enrobage est rendu régulier, notamment par la mécanisation. En outre, le géotextile peut être choisi en fonction de sa destination. Ainsi, on privilégiera une grande conductivité thermique pour protéger un câble électrique, et on privilégiera la résistance au poinçonnement pour protéger une conduite. De plus, le géotextile garde ses qualités dans le temps. Il n'est pas soumis à un lavage ou un fluage comme peut l'être un matériau pulvérulent, du sable ou du sablon.

En outre, la mise en oeuvre d'un géotextile est aisée. Il peut notamment être découpé manuellement avec un cutter. Et leur faible poids, 10 à 80 kilogrammes, rend aisée la manutention des bobines.

A titre d'exemple seulement, on peut utiliser une nappe monocouche choisie parmi les références de géotextile suivantes, fournies par la société Fibertex ™: Fibertex F-43 S, Fibertex F-500, Fibertex F-400M, Fibertex F-650M et Fibertex F-1200M.

Bien sûr, l'invention n'est pas limitée aux exemples qui viennent d'être décrits et de nombreux aménagements peuvent être apportés à ces exemples, sans sortir du cadre de l'invention.

La bande peut être remplacée par deux (ou plus) bandes, l'une étant posée sous un câble et l'autre le recouvrant, les deux bandes (ou plus) étant ensuite fixées entre elles sur le câble.

La fixation par soudage peut être remplacée par une fixation à l'aide d'une spiraleuse qui entoure la gaine de géotextile avec un ou plusieurs rubans sur toute la longueur nécessaire. On peut aussi entourer la gaine de géotextile avec un fil tendu en hélice autour de la gaine. Un recouvrement du géotextile représentant de 10 à 20% de la largeur de la bande initiale est généralement suffisant.

Notamment pour des fixations ponctuelles, il peut être prévu un soudage par buse à air portative, éventuellement un simple sèche- cheveux, ou bien une fixation à l'aide d'un ruban de type Velcro™ mâle.

Pour la pose de grandes longueurs de câble ou de conduite, ou sur des terrains non carrossables, la fourgonnette peut être remplacée par un châssis sur chenille. Un tel matériel haut de gamme peut être prévu pour être capable de porter et protéger selon l'invention 2 câbles HTA 95/240mm² ou une conduite PEHD diamètre 160 mm.

Un tel procédé peut aussi être utilisé avec un matériel adapté à la pose de conduites rigides ou semi-rigides.

## Revendications

1. Procédé pour protéger au moins un objet de forme allongée tel qu'une conduite, une canalisation ou un câble (1), selon lequel une bande de géotextile (2) comprenant une seule nappe d'au moins une couche en matériau non tissé est mise en forme et fixée autour dudit objet allongé,
**caractérisé en ce que**
- on dépose progressivement l'objet de forme allongée sur un géotextile en forme de bande sensiblement plane ;
- la bande de géotextile (2) est repliée en forme de gaine autour de l'objet allongé ; et,
- on fixe la bande autour de l'objet allongé.

2. Procédé selon la revendication 1, **caractérisé en ce que** la nappe présente une résistance à la traction comprise entre 30 et 50 kN/m, de préférence entre 35 et 45 kN/m, selon le sens machine et une résistance à la traction de 35 à 110 kN/m, de préférence entre 80 à 105 kN/m, transversalement au sens machine, mesurée selon la norme EN ISO 10319.

3. Procédé selon la revendication 1 ou 2, **caractérisé en ce que** la nappe présente une élasticité comprise entre 50 et 110 %, de préférence entre 80 et 100 %, selon le sens machine et une élasticité comprise entre 40 et 80 %, de préférence entre 50 et 70 %, transversalement au sens de la machine mesurée selon la norme EN ISO 10319.

4. Procédé selon l'une des revendications 1 à 3, **caractérisé en ce que** la nappe présente une conductivité thermique comprise entre 0,05 et 0,9 W/(m.K), de préférence supérieurs à 0,07W/(m.K), mesurée à une température ambiante d'environ 8°C.

5. Procédé selon l'une des revendications 1 à 4, **caractérisé en ce que** la masse de la nappe est comprise entre 300 et 2000 g/m², et de préférence entre 650 et 1200 g/m².

6. Procédé selon l'une des revendications 1 à 5 **caractérisé en ce que** la bande comprend un matériau thermo-soudable, et **en ce qu'**on fixe la bande par thermo-soudage sur elle-même.

7. Procédé selon la revendication 6, **caractérisé en ce que** le thermo-soudage est réalisé par air chaud (141).

8. Procédé selon la revendication 6, **caractérisé en ce que** le thermo-soudage est réalisé à haute fréquence (142) et/ou laser.

9. Procédé selon l'une des revendications 6 à 8, **caractérisé en ce que** la bande comprend au moins un polypropylène et/ou un polyéthylène.

10. Procédé selon l'une des revendications 1 à 5, **caractérisé en ce que** la bande est fixée par spiralage.

11. Procédé selon l'une des revendications 1 à 10, **caractérisé en ce qu'**une première partie de la bande est formée en gaine à mesure où, en aval, on fixe une deuxième partie de la bande déjà formée en gaine et **en ce que** l'on enterre, plus en aval, le câble ou la conduite avec une troisième partie de la bande qui y est déjà fixée.

12. Procédé selon l'une des revendications 1 à 11, **caractérisé en ce que** la couche en matériau non tissé a une résistance au poinçonnement comprise entre 300 et 13000 N ou au-delà, de préférence entre 7000 et 13000 N, mesurée d'après la norme EN ISO 12236.

13. Procédé selon la revendication 12, **caractérisé en ce que** la couche en matériau non tissé a une résistance au poinçonnement comprise entre 9000 et 12000 N mesurée d'après la norme EN ISO 12236.

14. Procédé selon l'une des revendications 1 à 13, **caractérisé en ce que** la couche en matériau non tissé a une résistance au poinçonnement comprise entre 0 et 16mm, de préférence entre 0 à 5mm mesurée d'après la norme EN 918.

15. Procédé selon la revendication 14, **caractérisé en ce que** la couche en matériau non tissé a une résistance au poinçonnement comprise entre 0 et 3mm mesurée d'après la norme EN 918.

16. Procédé selon l'une des revendications 1 à 15, **caractérisé en ce que** la couche en matériau non-tissé présente une porosité moyenne comprise entre 25 et 300µm, de préférence entre 50 et 150µm, mesurée à l'aide d'un porosimètre PMI utilisé en milieu aqueux.

17. Procédé selon l'une des revendications 1 à 16, **caractérisé en ce que** la nappe est monocouche.

18. Procédé selon l'une des revendications 1 à 16, **caractérisé en ce que** la nappe est multicouche

19. Procédé selon la revendication 18, caractérisé l'au moins une couche de matériau non tissé est une couche centrale (7) d'un matériau non tissé de densité faible et de résistance mécanique élevée et en ce que la nappe comprend au moins une couche extérieure (6), la couvrant sur au moins un côté, en matériau non tissé de densité plus élevée.

20. Procédé selon la revendication 19, **caractérisé en ce que** la couche centrale est couverte sur les deux côtés avec des couches extérieures de matériaux non tissé de densité élevée

21. Procédé selon la revendication 19 ou 20, **caractérisée en ce que** chaque couche extérieure a une de conductibilité thermique élevée.

## Claims

1. Method for protecting an object having an elongate shape such as a duct, a pipe or a cable (1) in which a geotextile strip (2) comprising a single sheet of at least one layer of nonwoven material is shaped and fixed around said elongate object, **characterized in that**:
- the object having an elongate shape in progressively laid down onto a geotextile being in the shape of a substantially flat strip,
- the geotextile strip (2) is being folded into the shape of a sheath around the elongate object; and
- the strip is fixed around the elongate object.

2. Method according to claim 1, **characterized in that** the sheet has a tensile strength comprised between 30 and 50 kN/m, preferably between 35 and 45 kN/m, in the machine direction and a tensile strength of 35 to 110 kN/m, preferably between 80 to 105 kN/m, at right angles to the machine direction, measured according to the standard EN ISO 10319.

3. Method according to claim 1 or 2, **characterized in that** the sheet has an elasticity comprised between 50 and 110%, preferably between 80 and 100%, in the machine direction and an elasticity comprised between 40 and 80%, preferably between 50 and 70%, at right angles to the machine direction measured according to the standard EN ISO 10319.

4. Method according to one of claims 1 to 3, **characterized in that** the sheet has a thermal conductivity comprised between 0.05 and 0.9 W/(m.K), preferably greater than 0.07 W/(m.K), measured at an ambient temperature of approximately 8°C.

5. Method according to one of claims 1 to 4, **characterized in that** the mass of the sheet is comprised between 300 and 2000 g/m², and preferably between 650 and 1200 g/m².

6. Method according to one of claims 1 to 5 **characterized in that** the strip comprises a heat-sealable material, and **in that** the strip is fixed by thermosealing onto itself.

7. Method according to claim 6, **characterized in that** the thermosealing is carried out by hot air (141).

8. Method according to claim 6, **characterized in that** the thermosealing is carried out at a high frequency (142) and/or with a laser.

9. Method according to one of claims 6 to 8, **characterized in that** the strip comprises at least a polypropylene and/or a polyethylene.

10. Method according to one of claims 1 to 5, **characterized in that** the strip is fixed by spiral winding.

11. Method according to one of claims 1 to 10, **characterized in that** a first part of the strip is shaped like a sheath as, downstream, a second part of the strip already shaped like a sheath is fixed and **in that** further downstream, the cable or the pipe with a third part of the strip which is already fixed there is buried in the ground.

12. Method according to one of claims 1 to 11, **characterized in that** the layer of nonwoven material has a puncture resistance comprised between 300 and 13000 N or above, preferably between 7000 and 13000 N, measured in accordance with the standard EN ISO 12236.

13. Method according to claim 12, **characterized in that** the layer of nonwoven material has a puncture resistance comprised between 9000 and 12000 N measured in accordance with the standard EN ISO 12236.

14. Method according to one of claims 1 to 13, **characterized in that** the layer of nonwoven material has a puncture resistance comprised between 0 and 16 mm, preferably between 0 to 5 mm measured in accordance with the standard EN 918.

15. Method according to claim 14, **characterized in that** the layer of nonwoven material has a puncture resistance comprised between 0 and 3 mm measured in accordance with the standard EN 918.

16. Method according to one of claims 1 to 15, **characterized in that** the layer of nonwoven material has an average porosity comprised between 25 and 300 µm, preferably between 50 and 150 µm, measured using a PMI porosimeter used in aqueous medium.

17. Method according to one of claims 1 to 16, **characterized in that** the sheet is monolayer.

18. Method according to one of claims 1 to 16, **characterized in that** the sheet is multilayer.

19. Method according to claim 18, **characterized in that** the at least one layer of nonwoven material is a central layer (7) of a nonwoven material with a low density and high mechanical strength and **in that** the sheet comprises at least one outer layer (6), covering it on at least one side, of higher-density nonwoven material.

20. Method according to claim 19, **characterized in that** the central layer is covered on both sides with outer layers of high-density nonwoven materials.

21. Method according to claim 19 or 20, **characterized in that** each outer layer has a high thermal conductivity.

## Patentansprüche

1. Verfahren zum Schutz mindestens eines langgestreckten Gegenstands, z. B. einer Leitung, eines Leitungsrohrs oder eines Kabels (1), bei dem ein Geotextilstreifen (2) um den langgestreckten Gegenstand geformt und befestigt wird, wobei der Geotextilstreifen (2) ein einzelnes Gelege aus mindestens einer Lage aus Vliesstoff umfasst,
**dadurch gekennzeichnet, dass**
- der langgestreckte Gegenstand auf ein im Wesentlichen ebenes, streifenförmiges Geotextil progressiv abgelagert wird;
- der Geotextilstreifen (2) als Ummantelung um den langgestreckten Gegenstand gefaltet wird; und
- der Streifen um den langgestreckten Gegenstand befestigt wird.

2. Verfahren nach Anspruch 1, **dadurch gekennzeichnet, dass** das Gelege eine nach der Norm EN ISO 10319 gemessene Zugfestigkeit von 30 bis 50 kN/m, vorzugsweise von 35 bis 45 kN/m in Maschinenlaufrichtung und eine Zugfestigkeit von 35 bis 110 kN/m, vorzugsweise von 80 bis 105 kN/m quer zur Maschinenlaufrichtung aufweist.

3. Verfahren nach Anspruch 1 oder 2, **dadurch gekennzeichnet, dass** das Gelege eine nach der Norm EN ISO 10319 gemessene Elastizität von 50 bis 110 %, vorzugsweise von 80 bis 100 % in Maschinenlaufrichtung und eine Elastizität von 40 bis 80 %, vorzugsweise von 50 bis 70 % quer zur Maschinenlaufrichtung aufweist.

4. Verfahren nach einem der Ansprüche 1 bis 3, **dadurch gekennzeichnet, dass** das Gelege eine bei Raumtemperatur von ca. 8 °C gemessene Wärmeleitfähigkeit von 0,05 bis 0,9 W/(m.K), vorzugsweise über 0,07 W/(m.K) aufweist.

5. Verfahren nach einem der Ansprüche 1 bis 4, **dadurch gekennzeichnet, dass** die Masse des Geleges von 300 bis 2.000 g/m² und vorzugsweise von 650 bis 1.200 g/m² beträgt.

6. Verfahren nach einem der Ansprüche 1 bis 5, **dadurch gekennzeichnet, dass** der Streifen ein heißsiegelbares Material umfasst und dass der Streifen durch Heißsiegeln an sich selbst befestigt wird.

7. Verfahren nach Anspruch 6, **dadurch gekennzeichnet, dass** das Heißsiegeln mittels heißer Luft (141) erfolgt.

8. Verfahren nach Anspruch 6, **dadurch gekennzeichnet, dass** das Heißsiegeln mit hoher Frequenz (142) und/oder Laser erfolgt.

9. Verfahren nach einem der Ansprüche 6 bis 8, **dadurch gekennzeichnet, dass** der Streifen mindestens ein Polypropylen und/oder ein Polyethylen enthält.

10. Verfahren nach einem der Ansprüche 1 bis 5, **dadurch gekennzeichnet, dass** der Streifen durch spiralförmiges Wickeln befestigt wird.

11. Verfahren nach einem der Ansprüche 1 bis 10, **dadurch gekennzeichnet, dass** ein erster Abschnitt des Streifens als Ummantelung gebildet wird, während ein zweiter Abschnitt des bereits als Ummantelung gebildeten Streifens stromabwärts befestigt wird und während das Kabel bzw. die Leitung mit einem dritten Abschnitt des daran befestigten Streifens weiter stromabwärts eingegraben wird.

12. Verfahren nach einem der Ansprüche 1 bis 11, **dadurch gekennzeichnet, dass** die Lage aus Vliesstoff eine nach der Norm EN ISO 12236 gemessene Stanzfestigkeit von 300 bis 13 000 N oder darüber, vorzugsweise von 7 000 bis 13 000 N aufweist.

13. Verfahren nach Anspruch 12, **dadurch gekennzeichnet, dass** die Lage aus Vliesstoff eine nach der Norm EN ISO 12236 gemessene Stanzfestigkeit von 9 000 bis 12 000 N aufweist.

14. Verfahren nach einem der Ansprüche 1 bis 13, **dadurch gekennzeichnet, dass** die Lage aus Vliesstoff eine nach der Norm EN 918 gemessene Stanzfestigkeit von 0 bis 16 mm, vorzugsweise von 0 bis 5 mm aufweist.

15. Verfahren nach Anspruch 14, **dadurch gekennzeichnet, dass** die Lage aus Vliesstoff eine nach der Norm EN 918 gemessene Stanzfestigkeit von 0 bis 3 mm aufweist.

16. Verfahren nach einem der Ansprüche 1 bis 15, **dadurch gekennzeichnet, dass** die Lage aus Vliesstoff eine durchschnittliche Porosität von 25 bis 300 µm, vorzugsweise von 50 bis 150 µm aufweist, wobei die Porosität mittels eines im wässrigen Medium eingesetzten PMI Durchlässigkeitsmeßgeräts gemessen wird.

17. Verfahren nach einem der Ansprüche 1 bis 16, **dadurch gekennzeichnet, dass** das Gelege einlagig ist.

18. Verfahren nach einem der Ansprüche 1 bis 16, **dadurch gekennzeichnet, dass** das Gelege mehrlagig ist.

19. Verfahren nach Anspruch 18, **dadurch gekennzeichnet, dass** die mindestens eine Lage aus Vliesstoff eine Kemlage (7) eines Vliesstoffes mit geringer Dichte und hoher mechanischer Festigkeit ist und dass das Gelege mindestens eine Außenlage (6) aus Vliesstoff mit höherer Dichte umfasst, wobei die Außenlage es mindestens auf einer Seite abdeckt.

20. Verfahren nach Anspruch 19, **dadurch gekennzeichnet, dass** die Kemlage auf beiden Seiten mit Außenlagen aus Vliesstoff mit hoher Dichte abgedeckt ist.

21. Verfahren nach Anspruch 19 oder 20, **dadurch gekennzeichnet, dass** jede Außenlage eine hohe Wärmeleitfähigkeit aufweist.
